# EUROPEAN PATENT SPECIFICATION

(11) **EP 1 992 140 B1**
(45) Date of publication and mention of the grant of the patent: **09.05.2018**
(21) Application number: 07716103.2
(22) Date of filing: 07.03.2007
(51) Int. Cl.: H04L 29/06

(54) **COMMUNICATION STATION AND METHOD PROVIDING FLEXIBLE COMPRESSION OF DATA PACKETS**
KOMMUNIKATIONSSTATION UND VERFAHREN ZUR BEREITSTELLUNG EINER FLEXIBLEN KOMPRIMIERUNG VON DATENPAKETEN
STATION DE COMMUNICATION ET PROCÉDÉ COMPRENANT LA COMPRESSION FLEXIBLE DE PAQUETS DE DONNÉES

(30) Priority: 07.03.2006 US 743422 P; 22.09.2006 US 534404
(43) Date of publication of application: 19.11.2008
(73) Proprietor: Telefonaktiebolaget LM Ericsson (publ), 164 83 Stockholm (SE)
(72) Inventor: JOHANSSON, Ingemar, S-976 32 Luleå (SE); PELLETIER, Ghyslain, S-961 44 Boden (SE)
(74) Representative: Brann AB
(86) International application number: PCT/SE2007/050130
(87) International publication number: WO 2007/102780

(56) References cited:
- WO-A1-03/096647
- WO-A1-2007/031090
- US-A1- 2005 259 690
- US-B1- 6 608 841
- DEGERMARK M ET AL: "LOW-LOSS TCP/IP HEADER COMPRESSION FOR WIRELESS NETWORKS", WIRELESS NETWORKS, ACM, 2 PENN PLAZA, SUITE 701 - NEW YORK USA, vol. 3, no. 5, 1 October 1997 (1997-10-01) , pages 375-387, XP000728935, ISSN: 1022-0038, DOI: 10.1023/A:1019138108114
- 'Robust Header Compression (ROHC); Framework and four profiles: RTP, UDP, ESP, and uncompressed' RFC 3095, [Online] July 2001, XP015008878 Retrieved from the Internet: <URL:http://www.rfc-editor.org/rfc/rfc3095. txt>

## Description

### TECHNICAL FIELD OF THE INVENTION

The present invention relates generally to packet communications and, more particularly, to a communication station and method providing flexible compression techniques in packet communications.

### BACKGROUND OF RELATED ART

The following is a list of abbreviations that are utilized herein:
- GERAN/EDGE: GSM EDGE Radio Access Network
- UTRAN/DCH: UMTS Terrestrial Radio Access Network/Dedicated channel
- HSxPA: High-Speed x Packet Access
- RTP: Real-time Transport Protocol
- RTCP: Real-time Transport Control Protocol
- UDP: User Datagram Protocol
- HC: Header Compression
- ROHC: RObust Header Compression
- IR: ROHC Initialization and Refresh packets
- IR-DYN: IR-Dynamic Part packets
- SIP: Session Initiation Protocol
- NACK: Negative acknowledgments
- DTX: Discontinuous Transmission
- IPv4: Internet Protocol version 4
- CRC: ROHC Cyclically Redundancy Checksum
- SID: Silence InDicator (the frames from the codec contains only comfort noise parameters) for GSM-EFR
- GSM: Global System for Mobile Communications
- EDGE: Enhanced Data rates for GSM Evolution
- UMTS: Universal Mobile Telecommunications System
- AMR-NB: Adaptive Multi-Rate Narrow-Band codec
- AMR-WB: Adaptive Multi-Rate Wide-Band codec
- EVRC: Enhanced Variable Rate codec
- SMV: Selectable Mode Vocoder
- VMR: Variable-Rate Multimode codec
- IETF: Internet Engineering Task Force
- RFC: Request For Comments in IETF
- CRTP: Compressing Real-time Transport Protocol
- EFR: Enhanced Full Rate codec

Today, many audio or audiovisual applications in wireless systems have limited flexibility with respect to the transport channel. Transport channels such as GERAN/EDGE channels and UTRAN/DCH channels may have fixed throughput rates. Even though more flexible radio bearers are being designed (for example, HSxPA channels), channels with fixed bandwidth may be used at cell borders or in legacy hardware. It is expected that different application streams, such as Real-time Transport Protocol (RTP) streams and Real-time Transport Control Protocol (RTCP) streams, may be transported on different bearers, but they will still interfere to some extent with each other in terms of contention for the same transmission resources.

Some speech coders (e.g., AMR -NB, AMR-WB, EVRC, SMV and VMR) are capable of controlling the maximum coding rate during speech activity. Speech coders such as IS-733, EVRC, SMV and VMR may also reduce their average coding rate during speech activity. The coding rate is then reduced over a longer period of time frame than a speech frame. In addition to adjusting the source coding rate, applications may also control the bandwidth of the IP/UDP/RTP overhead by aggregating several 20-ms source frames before transport. Alternatively, the IP/UDP/RTP overhead may also be compressed using header compression (HC) techniques. Exemplary HC protocols include Internet Engineering Task Force (IETF) request for comments (RFC) 1144 (Van Jacobson (VJ)), RFC 2507 (Internet Protocol Header Compression (IPHC)), RFC 2508 (Compressing Real-time Transport Protocol (CRTP)), and RFC 3095, 3759 (RObust Header Compression (ROHC)).

The original ROHC RFC 3095 defines a framework for header compression, along with compression protocols (profiles) for IP/UDP/RTP, IP/UDP, and also a profile for uncompressed packet streams. RFC 3095 defines packet formats for ROHC Initialization and Refresh (IR) packets and IR-Dynamic Part (IR-DYN) packets, which are used for communicating static and/or dynamic parts of a context. For each of the compression profiles defined in RFC 3095, there is a single last header in the header chain that clearly marks the termination of the static chain. The length of the dynamic chain is then inferred from the static chain in the IR header itself, or from the static chain in the context of the IR-DYN header. The length of both static and dynamic chains may thus be of arbitrary length and may, in theory, initialize a context with an arbitrary number of IP levels.

Header compression (HC) minimizes the required bandwidth for information carried in headers on a per-hop basis over point-to-point links. Header compression takes advantage of the fact that some fields in the headers are static or predictable. That is, they do not change from packet to packet within a particular flow of transmitted information, or they change with small and/or predictable values. Header compression schemes make use of these characteristics and only send static header information at the beginning of the stream, while changing values are sent with their absolute values or as differences from packet to packet. Completely random values are preferably sent in each header, that is, without any compression. HC schemes attempt to keep the compressor and decompressor states, called contexts, consistent with each other while keeping the header overhead as low as possible.

United States Patent No. 6,556,587 to Svanbro et al. describes a method and apparatus for a soft-state header compression scheme where a real-time communication signal can be updated during periods of inactivity. The header compression soft state in Svanbro can also be updated by stealing bits from the communication signal to carry the header update information. If the communication signal includes source encoded data, the header compression soft state can be updated selectively based on the bit rate of a codec that produced the source encoded data.

Korean patent application KR-2005017083 shows a network system and controlling method for transmitting a data packet having a compressed header. A ROHC compression releasing unit releases a compressed header of a data packet based on the compression releasing context, and generates a feedback message if the compression releasing context and a compression context are inconsistent.

United States Patent No. 6,608,841 to Koodli provides for a header compression and reconstruction method establishing a context state for non-changing header fields and first-order differences for changing header fields between the compressors and decompressors of two communicating terminals. The header compression scheme requires that when a second-order difference of a field is non-zero, an RTP packet whose second-order difference is non-zero is sent with the new first-order difference, and following packets are also sent with the new first-order difference as long as certain conditions are fulfilled.

An audio or audiovisual application source consumes a varying amount of bandwidth due to source characteristics. For example, for a conversational speech service of today, the application utilizes a time-varying bandwidth in the range of 0 to 32 kbps. An audiovisual service of today typically consumes a time-varying bandwidth of 32-128 kbps. None of the existing HC methods are effective at reducing such bandwidth fluctuations.

It is noted that the problem with the varying bandwidth of applications and services may also be derived from the characteristics of the packet or header compression protocol in use. The header and/or packet size variation of data packets today cannot be modeled using a deterministic function, and this makes it difficult to set the most appropriate application rate (e.g., the codec rate) for the application. The issue of setting the most appropriate application rate, in turn, often leads to a varying packet size for the media flow and a varying bandwidth for the application and/or service. None of the existing HC methods solve the problems caused by varying packet sizes in application media flows.

What is needed in the art is a communication station and method for flexible compression in packet communications that overcomes the shortcomings of the prior art. The present invention provides such a communication station and method.

### SUMMARY OF THE INVENTION

The present invention provides a solution for faster startup of a session, reduced control channel startup delay, and reduced media stream delay variation resulting in a lower average delay and a lower erasure rate for the media stream. Additionally, packets larger than the most frequent and optimally compressed packets, e.g. the ROHC IR/IR-DYN packets, are transmitted faster over bottleneck links, resulting in a faster startup and reduced bandwidth fluctuations. Thus, a prioritization of updates such as ROHC updates, is effectively achieved without using a bearer that supports transport layer prioritization. The invention is applicable for communication of various data types such as audio, still image, text messaging, and video data.

The present invention also solves or alleviates the problems with high delay variations and erasure rates for application media streams that originate from the varying bandwidth of applications and services due to such varying source characteristics.

The present invention also solves the problems caused by varying packet sizes in application media flows. The invention takes advantage of the characteristics of the packet or header compression protocols in use (for example the ROHC header compression protocol) to solve these problems.

The present invention is directed to a method and a communication station for determining a packet format of a data packet based on at least one compressed header information field. According to various embodiments of the invention, the determining of a packet format is dependent on the determined packet format of a partially or a completely compressed header information part. The header information part may be at least one compressed header information field of a partial packet.

Thus, in one aspect, the present invention is directed to a method of producing a compressed data packet in a communication station. The method includes the steps of determining a packet format of the data packet based on a compressed header information field; and generating compressed data for the data packet dependent on the determined packet format. In one embodiment, the compressed header information field is a header information field of a partial packet. The invention may also determine an application rate such as a codec rate, based on the compression of the header information field. According to a particular embodiment of the present invention, internal cross-layer signaling from a header generator module to a payload generator module in the communication station is used for signaling information associated with the determined header packet format of the data packet.

In another aspect, the present invention is directed to a method of compressing and transmitting a data packet from a communication station having a payload generator module and a header generator module. The data packet includes a payload information part as well as a header information part, which includes a plurality of header information fields. The method includes the steps of generating in the payload generator module, a partial packet having at least one populated header information field; compressing by the header generator module, data in the populated header information field of the partial packet; determining by the header generator module, a packet format for the data packet based on the compressed header information field of the partial packet; and sending an indication of the determined packet format from the header generator module to the payload generator module. The method also includes copying compressed data in at least one of the header information fields of the partial packet into a corresponding header information field of the data packet; generating in the payload generator module, data for the payload information part of the data packet based on the determined packet format; compressing the data for the payload information part of the data packet; and transmitting the data packet.

In another aspect, the present invention is directed to a communication station for generating and transmitting a data packet. The communication station includes a header generator module for determining a packet format for the header part of the data packet based on a compressed header information field of a previously generated data packet; a payload generator module for generating payload data of the data packet based on the determined packet format; and a transmitter for transmitting the data packet. In one embodiment, the previously generated data packet is a partial packet.

In another aspect, the present invention is directed to a communication station for generating and transmitting a data packet. The communication station includes a packet generator for generating the data packet; a controller module for generating a partial packet; a compressor for compressing data in at least one populated header information field of the partial packet; and determining means for determining a packet format based on the compression of data in the at least one populated header information field of the partial packet. The communication station also includes sending means for sending an indication of the determined packet format to the packet generator; a codec for encoding the payload data of the data packet dependent on the selected packet format, and for sending the encoded payload data to the packet generator; and a transmitter for transmitting the data packet.

### BRIEF DESCRIPTION OF THE DRAWINGS

In the following, the essential features of the invention will be described in detail by showing preferred embodiments, with reference to the attached figures in which:
Fig. 1 is a simplified block diagram of a communication station according to a first exemplary embodiment of the present invention;
Fig. 2 is a simplified block diagram of a communication station according to a second exemplary embodiment of the present invention;
Fig. 3 is a simplified block diagram of a communication station according to a third exemplary embodiment of the present invention;
Fig. 4 is a simplified block diagram of a communication station according to a fourth exemplary embodiment of the present invention;
Fig. 5 is a simplified block diagram of a communication station according to a fifth exemplary embodiment of the present invention;
Fig. 6 is a simplified block diagram of a communication station according to a sixth exemplary embodiment of the present invention;
Fig. 7 is a flow chart illustrating the steps of a first exemplary embodiment of the method of the present invention;
Fig. 8 is a flow chart illustrating the steps of a second exemplary embodiment of the method of the present invention;
Fig. 9 is a flow chart illustrating the steps of a third exemplary embodiment of the method of the present invention; and
Fig. 10 is a flow chart illustrating the steps of a fourth exemplary embodiment of the method of the present invention.

### DETAILED DESCRIPTION OF EMBODIMENTS

Although many of the examples and embodiments described herein relate to the ROHC header compression protocol for reasons of simplicity, the present invention is not be limited to use of the ROHC protocol, but is also applicable for any other header compression protocol and/or packet compression protocol. The invention is defined by the attached claims. In one embodiment, the present invention efficiently splits the header compression operation into a preparatory step and a finalization step. The preparatory step may include compressing at least one header information field of a partial packet. The finalization step includes determining a packet format of a data packet and/or the compressed payload data of a data packet based on the compressed header information field of the partial packet. A partial packet in the present patent application may be a data packet which is generated and processed internally within the communication station, but which is never transmitted to a receiving unit. The partial packet may include zeros or dummy data as payload data. To determine the size of the compressed header, the header compression algorithm needs to know the entire packet except for the information pertaining to the size of the payload (i.e., the application rate).

Thus, the partial packet is an IP packet that is partially complete (i.e., not all fields of the packet have their final/definitive values). Only the values that are absolutely needed for compression are defined. This is because the packet cannot be completely filled with the proper information before its header has been processed by the header compression algorithm. The size of the compressed header needs to be determined before the application rate (i.e., the size and the payload of the packet, and consequently the checksum calculated over the payload) can be determined.

Once the size of the fully or partially compressed header part of the partial packet is known, then the header generator module in the communication station may signal back to the payload generator module what is needed for the application to generate payload data of adequate size for the final data packet.

The application may also interact with the header compressor to adjust the compression rate of a multi-rate or scalable codec. In particular, a feedback signal from the header compressor in the communication station may be sent to the application to indicate the size of a compressed header. The header compressor then adjusts the instant or average compression rate of a multi-rate or scalable codec.

Internal cross-layer signaling from a header generator module to a payload generator module in the communication station may be utilized for signaling information related to the packet format of the data packet. The cross-layer signaling may also be used to signal information as input to the rate controller in a multi-rate or scalable codec, to allow for higher bandwidth for intermittent ROHC bandwidth needs, resulting in a higher quality representation. The estimation of ROHC external bandwidth needs may also be based on application internal signaling using the Real-Time Control Protocol (RTCP) or the Session Initiation Protocol (SIP).

Examples of in-call bandwidth needs are SIP-messages (REGISTER, UPDATE, and REINVITE are sent to keep the SIP session alive) as well as the selection by the ROHC compressor of an IR packet type or an IR-DYN compressed header type. ROHC IR-DYN packets are sent periodically (unidirectional operation) when NACKs are received (bidirectional operation) or when the change patterns of the flow requires it.

The header compressor in the communication station does not need to know the payload size until the final stages of formatting the bits for link transmission. The payload size is only required for the checksum calculation that protects the decompression process. This checksum is calculated over the entire original header, including the IP length field, and makes the decompression robust. It is therefore possible to let the ROHC compressor split its work into two distinctive steps. A compression step, where the ROHC packet format/type including the final size of the compressed header is identified, and a paketization step where the compressed header format is finalized with the robustness information and transport layer checksums. Between these two steps, a rate controller may be utilized to adjust the encoder to provide a bit rate that is best suited for the available instantaneous bandwidth.

In another embodiment, after determining the header packet format, the communication station determines a robustness level, prediction level, and/or a size for the compressed payload part of a data packet dependent on the determined packet format. The method may also include further steps for determining whether to drop a data packet, or whether to use inter-coding for encoding the data packet and/or a later data packet following the data packet.

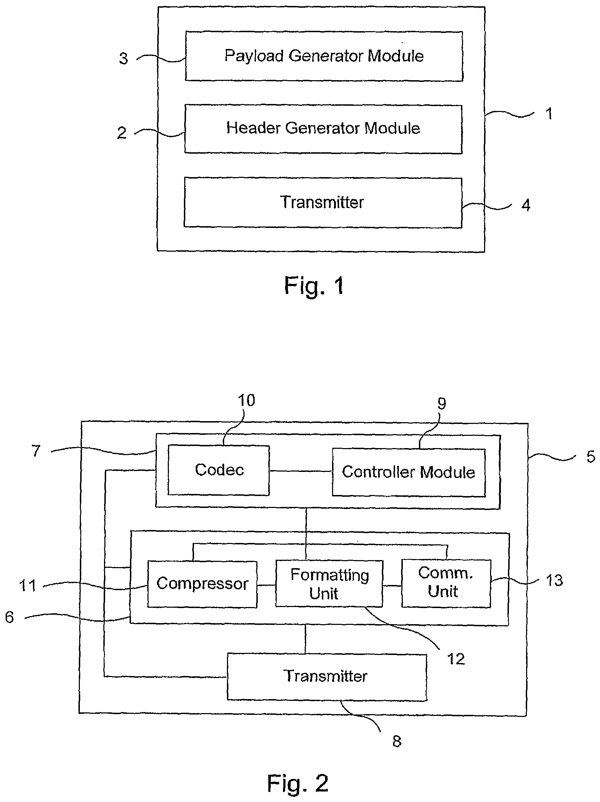

Fig. 1 is a simplified block diagram of a communication station 1 according to a first exemplary embodiment of the present invention. The communication station 1 includes a header generator module 2 for determining a packet format for the header part of a data packet based on a compressed header information field. The communication station 1 also includes a payload generator module 3 fo r generating payload data for the data packets, and a transmitter 4 for transmitting the data packets.

Fig. 2 is a simplified block diagram of a communication station 5 according to a second exemplary embodiment the present invention. The communication station 5 includes a header generator module 6 for determining a packet format for a data packet based on a compressed header information field. The communication station 5 also includes a payload generator module 7 for generating payload data of a data packet, and a transmitter 8 for transmitting the data packets. The payload generator module 7 includes a controller module 9 for controlling and generating payload and header data, and a codec 10 for encoding and decoding audio or audiovisual data. The generated payload data in the payload generator module 7 may be, for example, audio and/or audiovisual data. The header generator module 6 includes a compressor 11 for compressing data, a formatting unit 12 for determining a packet format for the data packet, and a communication unit 13 for sending an indication of the determined packet format to the payload generator module 7. Based on the received indication of the packet format, the controller module 9 may also determine the adequate robustness level and prediction level for the application, e.g. whether or not the codec 10 should use inter-coding for encoding the data packet to be generated and/or a following data packet to be generated.

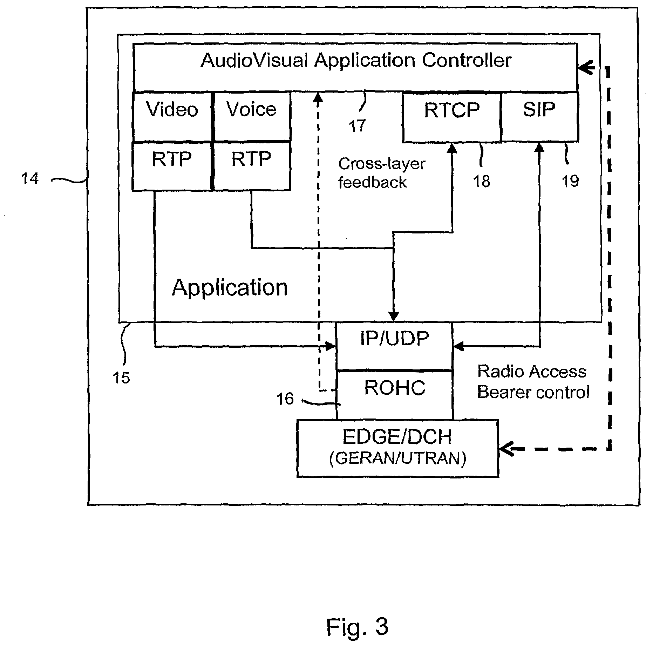

Fig. 3 is a simplified block diagram of a communication station 14 according to a third exemplary embodiment the present invention. The communication station includes an application 15. Fig. 3 illustrates the process flows for processing audio or audiovisual information according to different embodiments of the present invention. The estimation of external ROHC bandwidth may be based on cross-layer feedback signaling between an ROHC compressor 16 and an AudioVisual Application Controller 17 within the application. Alternatively, the required bandwidth may be identified via internal signaling in the application from an RTCP unit 18 or a SIP unit 19. Straight-forward bandwidth models may also be used within the application 15, e.g. based on the ROHC initialization requirements at session startup and/or the assumptions for additional ROHC compressed information for RTP timestamps at transitions from Discontinuous Transmission (DTX) to activity. In addition, event signals may be used to indicate the bandwidth requirements as well as start and duration for the time-period that the indicated bandwidth requirement is desired.

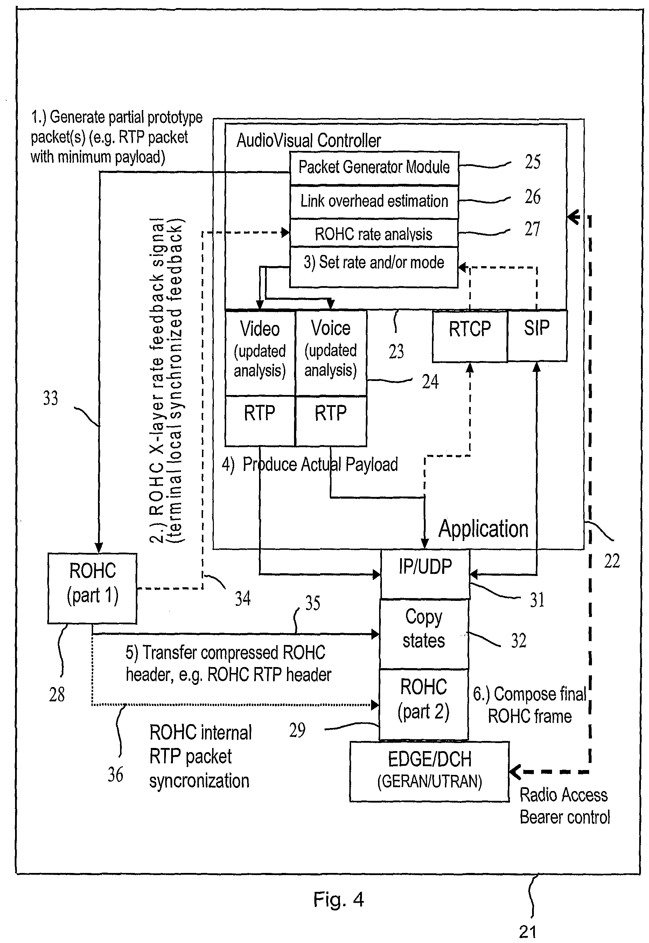

Fig. 4 is a simplified block diagram of a communication station 21 according to a fourth exemplary embodiment the present invention. An application 22 includes an AudioVisual Controller 23 and multi-rate video and voice codecs 24. The AudioVisual Controller includes a Packet Generator Module 25, a Link Overhead Estimation unit 26, and an ROHC Rate Analysis unit 27. The Packet Generator Module generates the next IP header to be used, with all fields having their correct values, including sampling instant and sequence number, except for the length information. The length information cannot be part of this information because it is derived from the "codec rate" used for the corresponding packet. The Link Overhead Estimation unit performs this function.

The communication station also includes an ROHC compressor (part 1) 28, an ROHC compressor (part 2) 29, an IP/UDP protocol stack 31, and a Copy States unit 32. A first interface 33 connects the Packet Generator Module with the ROHC compressor (part 1). A second interface 34 connects the ROHC compressor (part 1) with the ROHC Rate Analysis unit. A third interface 35 connects the ROHC compressor (part 1) with the Copy States unit. A fourth interface 36 connects the ROHC compressor (part 1) with the ROHC compressor (part 2) for ROHC internal RTP packet synchronization.

In a preparatory operation, the Packet Generator Module 25 prepares a partial RTP packet (with zero or dummy payload) corresponding to the next IP header that the application 22 will use for the next frame. The partial packet is sent over interface 33 to the ROHC compressor (part 1) 28. The header information that depends on the size of the payload is either not filled in or zeroed. This information may include the UDP checksum, which is calculated over the actual payload bits (if enabled for IPv4); the UDP length field, which requires knowledge of the size of the payload; the IP length field, which requires knowledge of the size of the payload; and the IPv4 checksum field, which requires knowledge of the exact values of all fields in the IP header.

The ROHC compressor (part 1) 28 compresses the header information utilizing all of the normal compression steps mandated by the compression algorithm in use, for example the ROHC algorithm, up to the point where the value of the fields in the IP header that depend on the size of the payload are needed for the computation of the compressed header. Specifically, the ROHC compressor (part 1) may compress up to the point where the final compressed header format gets selected and the header is filled with compressed values of all fields except for the UDP checksum, which is calculated over the actual payload bits (if enabled for IPv4), and the ROHC Cyclically Redundancy Checksum (CRC), which is calculated over the complete, uncompressed header for non-IR packets.

The ROHC compressor (part 1) 28 utilizes the interface 34 to inform the ROHC Rate Analysis unit 27 of the size of the compressed header, according to the header of the partial RTP packet that was received from the Packet Generator Module 25. The ROHC compressor (part 1) also utilizes the interface 35 to transfer the compressed ROHC RTP header over the interface 35 to the Copy States unit 32. The ROHC Rate Analysis unit uses the header size information to set the appropriate rate for the multi-rate, or scalable, voice/video codec(s) 24. The codec(s) provide the actual compressed voice/audio/video payload, which is sent to the IP/UDP protocol stack 31. The codec(s) may send only the generated payload as a complement to the next IP header that the ROHC compressor (part 2) 29 already received, or may send the now complete "next" IP packet, whose header has the exact same values as the next IP header that was originally used except for the values related to the size of the payload, which now have their real values.

In a secondary operation of ROHC processing, the headers from the preparatory operation are reused. The RTP/UDP/IP header must be the exact same as the one in the compression step except for the IP and UDP length fields, IPv4 checksum, and UDP checksum. The Copy States unit 32 copies the compressed data in at least one of the header information fields of the partial packet into a corresponding header information field of the data packet. In a packetization step, the ROHC checksum is calculated using the total size of the RTP packet including the application payload. ROHC compressor (part 2) 29 then combines the payload with the already prepared ROHC RTP header to form a final data packet for the link layer. The ROHC compressor (part 2) may fill the correct value of the UDP checksum in the compressed header (if enabled for IPv4), or may calculating the ROHC CRC over the complete, uncompressed header for non-IR packets.

It should be noted that, according to this embodiment of the present invention, the IPv4 checksum field is never sent in the compressed headers. It is recalculated by the decompressor after successful decompression. The UDP length and IP length fields are also not sent because they are inferred from the link layer. However, their exact value must be known for non-IR packets when calculating the ROHC CRC since they are all part of information protected by the 3- and 7-bit CRC. The calculations and the coverage of the CRC for any protocol or profile is specific to the protocol and/or profile itself, so other ways of calculating the CRC may be defined in protocols or profiles other than ROHC.

Thus, the invention according to the embodiments of Fig. 4 is a two-step process involving bidirectional signaling as a closed feedback loop between the codec and the header compressor using, for example, a simple Application Programming Interface (API), where the application pre-fetches the IP headers ahead of the generation of the encoded speech for the purpose of getting back from the compressor the information necessary to determine the rate of the encoding for the current audio or video frame, in order to generate a bit rate over the channel as constant as possible.

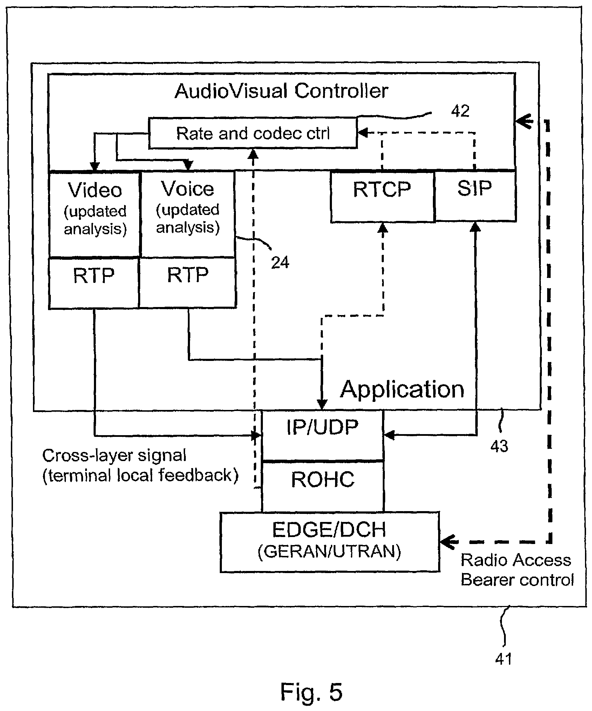

Fig. 5 is a simplified block diagram of a communication station 41 according to a fifth exemplary embodiment the present invention. When receiving cross-layer signaling, e.g. ROHC-related signaling, or application internal signaling, e.g. RTCP or SIP signaling, a Rate and Codec Control module 42 may adapt the rate and/or codec mode of the codecs 24. As previously mentioned, the AMR-NB and AMR-WB codecs have the capability to utilize several different coding modes. In the AMR-NB case, the possible bit rates span over the range 4.75kbps to 12.2kbps.

At startup or when receiving a cross-layer signal corresponding to the upcoming use of an IR (or IR-DYN) packet, or when a SIP signal indicates bandwidth is needed, the source-compressed max rate may be adapted. The AMR-NB max rate controller is reduced to the minimum available codec mode in the active codec mode set e.g. AMR 5.9. In a forced SID-UPDATE transmission, there is often only background noise present, initial speech frames which can be replaced by one or a few pre-computed SID_UPDATE frames. Alternatively, the SID_UPDATE frames may be conditionally computed from the input signal or the encoded speech parameters. Every SID_UPDATE packet after the initial SID_UDPATE may be suppressed for a period of up to 980 ms.

Due to backward compatibility with e.g. GSM-EFR Silence InDicator (SID) quantization, the AMR-NB and AMR-WB encoders often start up a session with at least seven speech frames. Various embodiments of the invention force the encoder to start with the lowest possible bandwidth consumption, if that is needed, and thus ensure that the ROHC initialization packets are transmitted over the radio network as fast as possible. The simplest solution is to always force the codec to run with the lowest possible bit rate in the beginning of the session for a pre-specified time. The encoder may also be forced to send out only intermittent low rate SID_UPDATE frames first in the beginning of the session. When the event times out, the controller returns the encoder and packetizer to its initial quality optimization state.

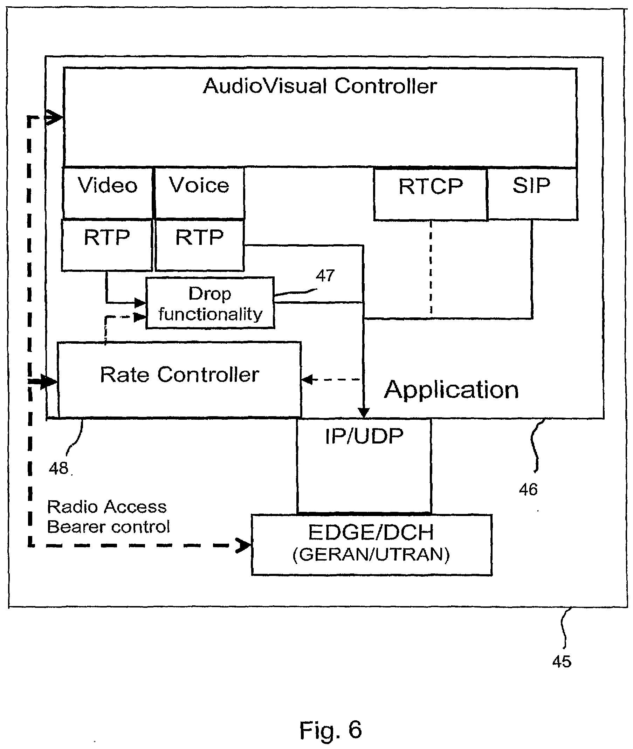

If a drop classifier is available (see e.g. Drop Functionality module 47 in Fig. 6), frames indicated as less important are skipped by the encoder. Based on a received indication of a packet format to be used for a data packet to be generated, the application 43 may first also determine the adequate robustness level and prediction level for the application which in turn also could determine whether or not the Drop Functionality module 30 should drop the data packet to be generated and/or drop a following data packet to be generated.

Fig. 6 is a simplified block diagram of a communication station 45 according to a sixth exemplary embodiment the present invention. An application 46 includes the Drop Functionality module 47 and a Rate Controller module 48 aggregating all traffic such as UDP traffic. Estimated bandwidth from the Rate Controller is sent to the Drop Functionality module where it is used to control a selective drop of packets such as, for example, video packets. The selective drop of packets may be useful due to the large variance of video packets. The selective drop may be more important when the application is using a strictly band-limited channel. This embodiment of the invention can be characterized as a type of cross application rate controller working on an aggregated transport layer, e.g. UDP. An alternative embodiment of the invention includes instant needs, e.g. instant ROHC needs, through cross-layer communication within the communication station 45.

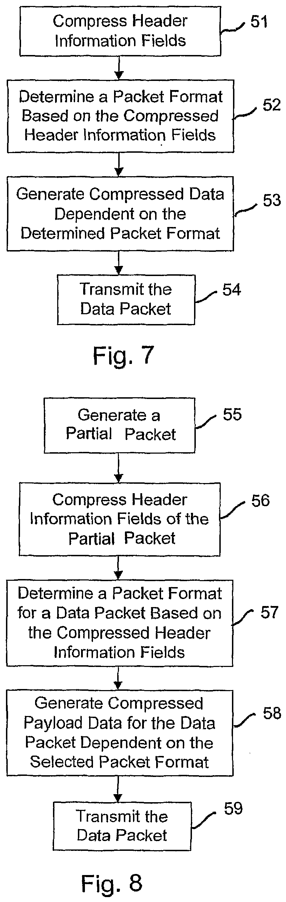

Fig. 7 is a flow chart illustrating the steps of a first exemplary embodiment of the method of the present invention. At step 51, header information fields are compressed. At step 52, a packet format is determined based on the compressed header information fields. At step 53, compressed data is generated dependant upon the determined packet format. At step 54, the data packet is transmitted.

Fig. 8 is a flow chart illustrating the steps of a second exemplary embodiment of the method of the present invention. At step 55, a partial packet is generated. At step 56, header information fields of the partial packet are compressed. At step 57, a packet format is determined for a data packet based upon the compressed header information fields. At step 58, compressed payload data is generated for the data packet dependent upon the determined packet format. At step 59, the data packet is transmitted.

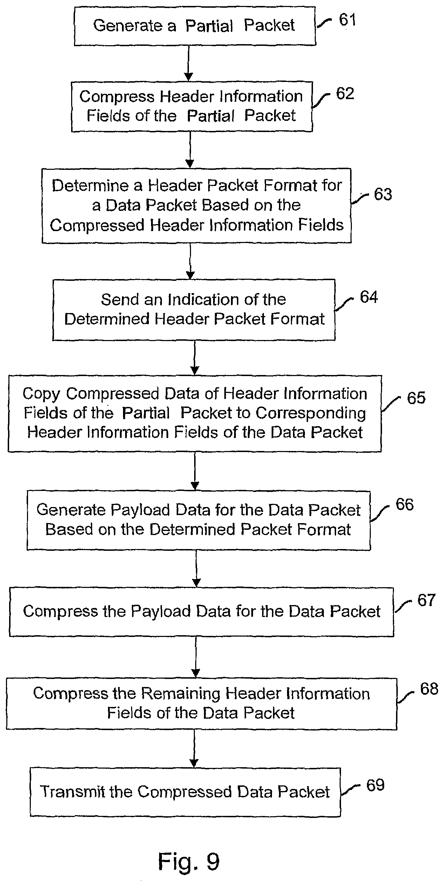

Fig. 9 is a flow chart illustrating the steps of a third exemplary embodiment of the method of the present invention. At step 61, the payload generator module (3) (Fig. 1) generates a partial packet having at least one populated header information field. At step 62, the header generator module (2) compresses data in the populated header information field of the partial packet . At step 63, the header generator module determines a header packet format for a data packet based upon the compressed header information fields of the partial packet . At step 64, an indication of the determined header packet format is sent from the header generator module to the payload generator module. At step 65, the header generator module copies the compressed data of the header information fields of the partial packet into corresponding header information fields of the data packet. At step 66, the payload generator module generates payload data for the data packet based upon the determined packet format. At step 67, the payload data for the data packet is compressed. At step 68, the remaining header information fields of the data packet are compressed. At step 69, the compressed data packet is transmitted.

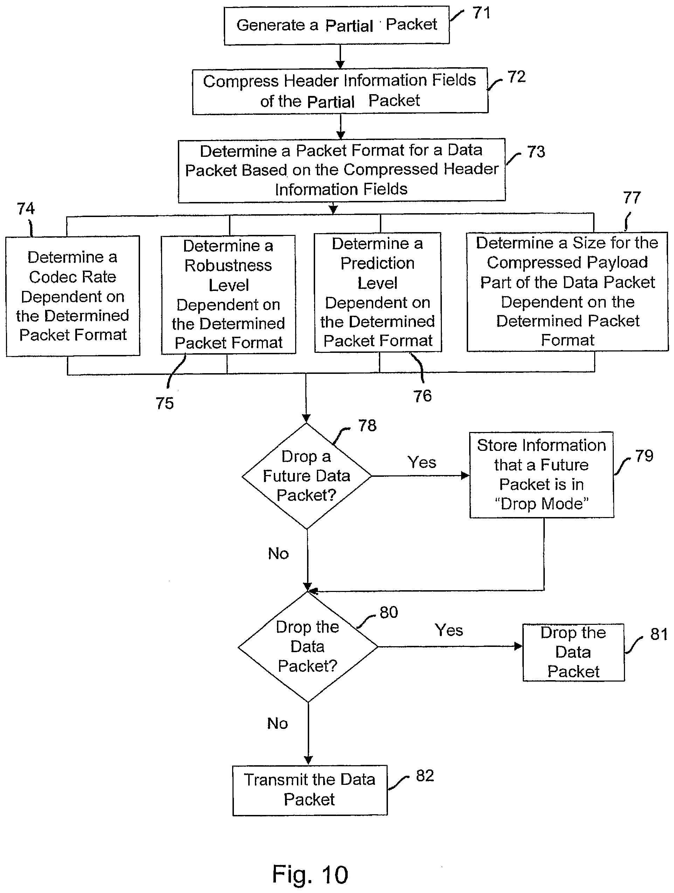

Fig. 10 is a flow chart illustrating the steps of a fourth exemplary embodiment of the method of the present invention. At step 71, a partial packet is generated. At step 72, header information fields of the partial packet are compressed. At step 73, a header packet format is determined for a data packet based upon the compressed header information fields. The method and then performs one of four alternative steps. In a first alternative step 74, a codec rate is determined dependent upon the determined packet format. In a second alternative step 75, a robustness level is determined dependent upon the determined packet format. In a third alternative step 76, a prediction level is determined dependent upon the determined packet format. In a fourth alternative step 77, a size for the compressed payload part of the data packet is determined dependent upon the determined packet format.

The method then moves to step 78 where it is determined whether to drop a future data packet. If a future data packet is to be dropped, the method moves to step 79 where information is stored that a future packet is in "Drop Mode". At step 80, it is determined at a future time whether to drop the data packet. If a packet is in Drop Mode, the method moves to step 81 where the data packet is dropped. If not, the method moves to step 82 where the data packet is transmitted. The specification contemplates any all modifications that fall within the scope of the invention defined by the following claims.

## Claims

1. A method of producing a compressed data packet in a communication station (1), which includes a payload generator module (3) and a header generator module (2), said method comprising:
determining (52) a packet format of the data packet based on a compressed header information field of a partial packet, wherein a partial packet is a packet generated and processed internally within the communication station, but which is never transmitted to a receiving unit, wherein the step of determining includes;
generating (61) a partial packet in the payload generator module;
compressing (62) in the header generator module, data in a populated header information field of the partial packet;
determining and selecting (63) in the header generator module, a packet format for the data packet based on the compressed header information field of the partial packet, and generating (53) compressed data for the data packet dependent on the determined packet format.

2. The method according to claim 1, further comprising transmitting (54) the data packet.

3. The method according to claim 1, wherein the packet format is a header packet format.

4. The method according to any of the preceding claims, further comprising copying the compressed data in at least one of the header information fields of the partial packet into a corresponding header information field in the data packet.

5. The method according to any of the preceding claims, further comprising after determining the packet format, the steps of:
sending (64) an indication of the determined packet format from the header generator module to the payload generator module; and
generating (66) in the payload generator module, data for the payload information part of the data packet based on the determined packet format.

6. The method according to any of the preceding claims, wherein the payload generator module includes a rate analysis module and a codec, and the determining step includes after determining the packet format, the step of determining (74) in the rate analysis module, a codec rate for the codec, wherein the codec rate is dependent on the determined packet format.

7. A method according to claim 1, said method comprising, after said determining and selecting step, calculating a size for the compressed data in the payload information part of the data packet, wherein the size is dependent on the selected packet format for the compressed header information part of the partial packet.

8. The method according to claim 7, wherein said step of calculating a size for the compressed data is also dependent on a maximum size for the compressed data packet.

9. The method according to claim 8, further comprising after said selecting step, the step of adapting the total size of the compressed data packet to a specific size.

10. The method according to claim 7, further comprising the step of copying the compressed data in at least one header information field of the partial packet into a corresponding header information field of the data packet.

11. The method according to claim 10, further comprising the step of generating data for the at least one remaining header information field of the data packet, wherein the at least one remaining header information field is a header information field of the data packet remaining to be filled in the data packet after the copying step.

12. A method according to claim 1, said method comprising:
sending (64) an indication of the determined packet format from the header generator module to the payload generator module;
copying (65) compressed data in at least one of the header information fields of the partial packet into a corresponding header information field of the data packet;
generating (66) in the payload generator module, data for the payload information part of the data packet based on the determined packet format;
compressing (67) the data for the payload information part of the data packet; and

13. A communication station (5) for generating and transmitting a data packet, said communication station comprising:
a packet generator (6, 7) for generating the data packet;
a controller module (9) for generating a partial packet, wherein a partial packet is a packet generated and processed internally within the communication station, but which is never transmitted to a receiving unit; a compressor (11) for compressing data in at least one populated header information field of the partial packet;
determining and selecting means (12) for determining a packet format based on the compressed data in the at least one populated header information field of the partial packet;
sending means (13) for sending an indication of the determined packet format to the packet generator;
a codec (10) for encoding the payload data of the data packet dependent on the selected packet format, and sending the encoded payload data to the packet generator; and
a transmitter(8) for transmitting the data packet.

14. A communication station (5) according to claim 13, wherein the packet generator module comprises:
a header generator module (6) for determining a packet format for the header part of the data packet based on a compressed header information field of a previously generated data packet, which is a partial packet;
a payload generator module (7) for generating payload data of the data packet based on the determined packet format; the payload generator module including a rate analysis module and a codec, wherein the rate analysis module is arranged to determine a codec rate for the codec dependent on the selected packet format, and

15. The communication station according to claim 14, further comprising cross-layer signaling means for sending the determined packet format from the header generator module to the payload generator module.

## Patentansprüche

1. Verfahren zum Herstellen eines komprimierten Datenpakets in einer Kommunikationsstation (1), welches ein Nutzdatengeneratormodul (3) und ein Kopfdatengeneratormodul (2) einschließt, wobei das Verfahren Folgendes umfasst:
Bestimmen (52) eines Paketformats des Datenpakets auf Grundlage eines komprimierten Kopfdateninformationsfeldes eines Teilpakets, wobei ein Teilpaket ein Paket ist, das intern in der Kommunikationsstation generiert und verarbeitet wird, welches jedoch nie zu einer Empfangseinheit übertragen wird, wobei der Schritt des Bestimmens Folgendes einschließt:
Generieren (61) eines Teilpakets in dem Nutzdatengeneratormodul;
Komprimieren (62) von Daten in einem ausgefüllten Kopfdateninformationsfeld des Teilpakets in dem Kopfdatengeneratormodul;
Bestimmen und Auswählen (63) eines Paketformats für das Datenpaket in dem Kopfdatengeneratormodul auf Grundlage des komprimierten Kopfdateninformationsfeldes des Teilpakets und
Generieren (53) komprimierter Daten für das Datenpaket in Abhängigkeit von dem bestimmten Paketformat.

2. Verfahren nach Anspruch 1, ferner umfassend das Übertragen (54) des Datenpakets.

3. Verfahren nach Anspruch 1, wobei das Paketformat ein Kopfdatenpaketformat ist.

4. Verfahren nach einem der vorhergehenden Ansprüche, ferner umfassend das Kopieren der komprimierten Daten in mindestens einem der Kopfdateninformationsfelder des Teilpakets in ein entsprechendes Kopfdateninformationsfeld in dem Datenpaket.

5. Verfahren nach einem der vorhergehenden Ansprüche, nach dem Bestimmen des Paketformats ferner umfassend die folgenden Schritte:
Senden (64) einer Anzeige des bestimmten Paketformats von dem Kopfdatengeneratormodul zu dem Nutzdatengeneratormodul; und
Generieren (66) von Daten für den Nutzdateninformationsteil des Datenpakets in dem Nutzdatengeneratormodul auf Grundlage des bestimmten Paketformats.

6. Verfahren nach einem der vorhergehenden Ansprüche, wobei das Nutzdatengeneratormodul ein Ratenanalysemodul und einen Codec einschließt, und der Bestimmungsschritt nach dem Bestimmen des Paketformats den Schritt des Bestimmens (74) einer Codecrate für den Codec in dem Ratenanalysemodul einschließt, wobei die Codecrate von dem bestimmten Paketformat abhängig ist.

7. Verfahren nach Anspruch 1, wobei das Verfahren nach dem Bestimmungs- und Auswahlschritt Folgendes umfasst:
Berechnen einer Größe für die komprimierten Daten in dem Nutzdateninformationsteil des Datenpakets, wobei die Größe von dem ausgewählten Paketformat für den komprimierten Kopfdateninformationsteil des Teilpakets abhängig ist.

8. Verfahren nach Anspruch 7, wobei der Schritt des Berechnens einer Größe für die komprimierten Daten außerdem von einer Maximalgröße für das komprimierte Datenpaket abhängig ist.

9. Verfahren nach Anspruch 8, nach dem Auswahlschritt ferner umfassend den Schritt des Anpassens der Gesamtgröße des komprimierten Datenpakets an eine spezifische Größe.

10. Verfahren nach Anspruch 7, ferner umfassend den Schritt des Kopierens der komprimierten Daten in mindestens einem Kopfdateninformationsfeld des Teilpakets in ein entsprechendes Kopfdateninformationsfeld des Datenpakets.

11. Verfahren nach Anspruch 10, ferner umfassend den Schritt des Generierens von Daten für das mindestens eine verbleibende Kopfdateninformationsfeld des Datenpakets, wobei das mindestens eine verbleibende Kopfdateninformationsfeld ein Kopfdateninformationsfeld des Datenpakets ist, das nach dem Kopierschritt in dem Datenpaket noch gefüllt werden muss.

12. Verfahren nach Anspruch 1, wobei das Verfahren Folgendes umfasst:
Senden (64) einer Anzeige des bestimmten Paketformats von dem Kopfdatengeneratormodul zu dem Nutzdatengeneratormodul;
Kopieren (65) komprimierter Daten in mindestens einem der Kopfdateninformationsfelder des Teilpakets in ein entsprechendes Kopfdateninformationsfeld des Datenpakets;
Generieren (66) von Daten für den Nutzdateninformationsteil des Datenpakets in dem Nutzdatengeneratormodul auf Grundlage des bestimmten Paketformats;
Komprimieren (67) der Daten für den Nutzdateninformationsteil des Datenpakets; und.

13. Kommunikationsstation (5) zum Generieren und Übertragen eines Datenpakets, wobei die Kommunikationsstation Folgendes umfasst:
einen Paketgenerator (6, 7) zum Generieren des Datenpakets;
ein Steuermodul (9) zum Generieren eines Teilpakets, wobei ein Teilpaket ein Paket ist, das intern in der Kommunikationsstation generiert und verarbeitet wird, welches jedoch nie zu einer Empfangseinheit übertragen wird;
einen Komprimierer (11) zum Komprimieren von Daten in mindestens einem ausgefüllten Kopfdateninformationsfeld des Teilpakets;
ein Bestimmungs- und Auswahlmittel (12) zum Bestimmen eines Paketformats auf Grundlage der komprimierten Daten in dem mindestens einen ausgefüllten Kopfdateninformationsfeld des Teilpakets;
ein Sendemittel (13) zum Senden einer Anzeige des bestimmten Paketformats zu dem Paketgenerator;
einen Codec (10) zum Codieren der Nutzdaten des Datenpakets in Abhängigkeit von dem ausgewählten Paketformat, und Senden der codierten Nutzdaten zu dem Paketgenerator; und
einen Sender (8) zum Übertragen des Datenpakets.

14. Kommunikationsstation (5) nach Anspruch 13, wobei das Paketgeneratormodul Folgendes umfasst:
ein Kopfdatengeneratormodul (6) zum Bestimmen eines Paketformats für den Kopfdatenteil des Datenpakets auf Grundlage eines komprimierten Kopfdateninformationsfeldes eines zuvor generierten Datenpakets, welches ein Teilpaket ist;
ein Nutzdatengeneratormodul (7) zum Generieren von Nutzdaten des Datenpakets auf Grundalge des bestimmten Paketformats; wobei das Nutzdatengeneratormodul ein Ratenanalysemodul und einen Codec einschließt, wobei das Ratenanalysemodul angeordnet ist, um eine Codecrate für den Codec in Abhängigkeit von dem ausgewählten Paketformat zu bestimmen und.

15. Kommunikationsstation nach Anspruch 14, ferner umfassend ein schichtübergreifendes Signalisierungsmittel zum Senden des bestimmten Paketformats von dem Kopfdatengeneratormodul zu dem Nutzdatengeneratormodul.

## Revendications

1. Procédé de production d'un paquet de données compressées dans une station de communication (1), qui comprend un module générateur de charge utile (3) et un module générateur d'entête (2), ledit procédé comprenant :
la détermination (52) d'un format de paquet du paquet de données sur la base d'un champ d'informations d'en-tête compressé d'un paquet partiel, dans lequel un paquet partiel est un paquet généré et traité en interne dans la station de communication, mais qui n'est jamais transmis à une unité de réception, dans lequel l'étape de détermination comprend :
la génération (61) d'un paquet partiel dans le module générateur de charge utile ;
la compression (62), dans le module générateur d'en-tête, de données dans un champ d'informations d'en-tête rempli du paquet partiel ;
la détermination et la sélection (63), dans le module générateur d'en-tête, d'un format de paquet pour le paquet de données sur la base du champ d'informations d'en-tête compressé du paquet partiel, et
la génération (53) de données compressées pour le paquet de données en fonction du format de paquet déterminé.

2. Procédé selon la revendication 1, comprenant en outre la transmission (54) du paquet de données.

3. Procédé selon la revendication 1, dans lequel le format de paquet est un format de paquet d'en-tête.

4. Procédé selon l'une quelconque des revendications précédentes, comprenant en outre la copie des données compressées dans au moins un des champs d'informations d'entête du paquet partiel dans un champ d'informations d'en-tête correspondant dans le paquet de données.

5. Procédé selon l'une quelconque des revendications précédentes, comprenant en outre, après la détermination du format de paquet, les étapes suivantes :
l'envoi (64) d'une indication du format de paquet déterminé du module générateur d'en-tête au module générateur de charge utile ; et
la génération (66), dans le module générateur de charge utile, de données pour la partie d'informations de charge utile du paquet de données sur la base du format de paquet déterminé.

6. Procédé selon l'une quelconque des revendications précédentes, dans lequel le module générateur de charge utile comprend un module d'analyse de taux et un codec, et l'étape de détermination comprend, après la détermination du format de paquet, l'étape de détermination (74), dans le module d'analyse de taux, d'un taux de codec pour le codec, dans lequel le taux de codec est dépendant du format de paquet déterminé.

7. Procédé selon la revendication 1, ledit procédé comprenant, après ladite étape de détermination et de sélection,
le calcul d'une taille pour les données compressées dans la partie d'informations de charge utile du paquet de données, dans lequel la taille est dépendante du format de paquet sélectionné pour la partie d'informations d'en-tête compressées du paquet partiel.

8. Procédé selon la revendication 7, dans lequel ladite étape de calcul d'une taille pour les données compressées est également dépendante d'une taille maximale pour le paquet de données compressées.

9. Procédé selon la revendication 8, comprenant en outre, après ladite étape de sélection, l'étape d'adaptation de la taille totale du paquet de données compressées à une taille spécifique.

10. Procédé selon la revendication 7, comprenant en outre l'étape de copie des données compressées dans au moins un champ d'informations d'en-tête du paquet partiel dans un champ d'informations d'en-tête correspondant du paquet de données.

11. Procédé selon la revendication 10, comprenant en outre l'étape de génération de données pour l'au moins un champ d'informations d'en-tête restant du paquet de données, dans lequel l'au moins un champ d'informations d'en-tête restant est un champ d'informations d'en-tête du paquet de données restant à remplir dans le paquet de données après l'étape de copie.

12. Procédé selon la revendication 1, ledit procédé comprenant :
l'envoi (64) d'une indication du format de paquet déterminé du module générateur d'en-tête au module générateur de charge utile ;
la copie (65) de données compressées dans au moins un des champs d'informations d'en-tête du paquet partiel dans un champ d'informations d'en-tête correspondant du paquet de données ;
la génération (66), dans le module générateur de charge utile, de données pour la partie d'informations de charge utile du paquet de données sur la base du format de paquet déterminé ;
la compression (67) des données pour la partie d'informations de charge utile du paquet de données ; et

13. Station de communication (5) pour générer et transmettre un paquet de données, ladite station de communication comprenant :
un générateur de paquet (6, 7) pour générer le paquet de données ;
un module de dispositif de commande (9) pour générer un paquet partiel, dans lequel un paquet partiel est un paquet généré et traité en interne dans la station de communication, mais qui n'est jamais transmis à une unité de réception ;
un compresseur (11) pour compresser des données dans au moins un champ d'informations d'en-tête rempli du paquet partiel ;
des moyens de détermination et de sélection (12) pour déterminer un format de paquet sur la base des données compressées dans l'au moins un champ d'informations d'en-tête rempli du paquet partiel ;
des moyens d'envoi (13) pour envoyer une indication du format de paquet déterminé au générateur de paquet ;
un codec (10) pour coder les données de charge utile du paquet de données en fonction du format de paquet sélectionné et envoyer les données de charge utile codées au générateur de paquet ; et
un émetteur (8) pour transmettre le paquet de données.

14. Station de communication (5) selon la revendication 13, dans laquelle le module générateur de paquet comprend :
un module générateur d'en-tête (6) pour déterminer un format de paquet pour la partie d'en-tête du paquet de données sur la base d'un champ d'informations d'en-tête compressé d'un paquet de données précédemment généré, qui est un paquet partiel ;
module générateur de charge utile (7) pour générer des données de charge utile du paquet de données sur la base du format de paquet déterminé ; le module générateur de charge utile comprenant un module d'analyse de taux et un codec, dans lequel le module d'analyse de taux est agencé pour déterminer un taux de codec pour le codec en fonction du format de paquet déterminé, et

15. Station de communication selon la revendication 14, comprenant en outre des moyens de signalisation inter-couches pour envoyer le format de paquet déterminé du module générateur d'en-tête au module générateur de charge utile.
